# EUROPEAN PATENT APPLICATION

(11) **EP 2 505 963 A2**
(43) Date of publication of application: **03.10.2012**
(21) Application number: 12157431.3
(22) Date of filing: 29.02.2012
(51) Int. Cl.: G01C 21/36, G06F 3/048

(54) **Display device, display method, and computer program product**

(30) Priority: 29.03.2011 JP 2011071571
(71) Applicant: Aisin AW Co., Ltd., Fuji-cho Anjo-shi Aichi 444-1192 (JP)
(72) Inventor: Taka, Yoichiro, Anjo-shi, Aichi 444-1192 (JP); Tsuboi, Toyohide, Anjo-shi, Aichi 444-1192 (JP)
(74) Representative: TBK

(57) **Abstract**

A display device comprises a displaying unit that displays information regarding a predetermined time point, a touch panel, a detecting unit that detects a position of a finger of a user where the touch panel is touched, and a display controlling unit. The display control unit determines a moving direction of the finger of the user on the touch panel based on the position of the finger of the user detected by the detecting unit while the finger of the user is touching the touch panel, determines a transition time corresponding to the determined moving direction, and displays on the display unit information regarding a time point when the determined transition time has passed since a time point corresponding to information being displayed on the display unit.

## Description

BACKGROUND OF THE INVENTION

### 1. Field of the Invention

The present invention relates to a display device, a display method, and a computer program product.

### 2. Description of the Related Art

Conventionally, map display devices that enable a user to confirm the position of a vehicle at a set time are utilized. For example, map display devices are proposed which, if a time in the future is set, displays on a display part a map including a point, where the vehicle reaches when moving along a previously-set route for a predicted travel distance that is acquired from an average speed of a movement. In these map display devices, based on an operation through [BACK] button or [FORE] button, the set time is changed by a unit of a predetermined time, and the map is scrolled according to the change in the set time (for example, Japanese Patent Application; Publication No. JP-A-2008-196923).

### SUMMARY OF THE INVENTION

However, in the conventional devices as described above, in which the set time is changed by a unit of a predetermined time by an operation through [BACK] button or [FORE] button, the operation can be troublesome because the button operation should be repeated if a difference between the current time and the set time is large.

In light of the above, it is an object of the present invention to provide a display device, a display method, and a computer program product that are capable of displaying information regarding a time point when a desired time has passed based on an intuitive and simple operation.

### [Means for Solving the Problems]

In order to solve the above-mentioned problem and achieve the object, a display device described in a first aspect of the present invention includes: a display unit that displays information regarding a predetermined time point; a touch panel; a detecting unit that detects a position of a finger of a user where the touch panel is touched; and a display controlling unit that determines a moving direction of the finger of the user on the touch panel based on the position of the finger of the user detected by the detecting unit while the finger of the user is touching the touch panel, determines a transition time corresponding to the determined moving direction, and displays on the display unit information regarding a time point when the determined transition time has passed since a time point corresponding to information being displayed on the display unit.

In the display device described in a second aspect of the present invention, in the display device according to the first aspect of the present invention, the display unit displays a map including a first vehicle symbol indicating a vehicle position at a predetermined timepoint; and the display controlling unit, if the finger of the user has moved using a position corresponding to a display position of the first vehicle symbol as an origin, displays on the display unit a map including a second vehicle symbol indicating a predicted position of the vehicle at a time point when the determined transition time has passed since a time point corresponding to the vehicle position indicated by the first vehicle symbol.

In the display device described in a third aspect of the present invention, in the display device according to the first or second aspect of the present invention, the display unit displays a map including a first facility symbol indicating a position and an attribute of a facility; and the display controlling unit, if the finger of the user has moved using a position corresponding to a display position of the first facility symbol as an origin, displays on the display unit a map including a second facility symbol corresponding to a facility, which exists in the vicinity of a position corresponding to a time point when the determined transition time has passed since a time point corresponding to the position of the facility indicated by the first facility symbol and which has the same attribute as the attribute indicated by the first facility symbol that was displayed at the origin.

A display method described in a fourth aspect of the present invention includes the steps of: displaying information regarding a predetermined time point on a display unit; detecting a position of a finger of a user where a touch panel is touched; and determining a moving direction of the finger of the user on the touch panel based on the position of the finger of the user detected at the detecting step while the finger of the user is touching the touch panel, determining a transition time corresponding to the determined moving direction, and displaying on the display unit information regarding a time point when the determined transition time has passed since a time point corresponding to information being displayed on the display unit.

A computer program product including a program for a processing device described in a fifth aspect of the present invention, comprises software code portions for performing the method of the fourth aspect of the present invention when the program is run on the processing device.

According to the display device described in the first aspect of the present invention, the display method described in the fourth aspect of the present invention, and the display program described in the fifth aspect of the present invention, the display controlling part determines the moving direction of the finger of the user on the touch panel based on the position of the finger of the user detected by the detecting unit while the finger of the user is touching the touch panel, determines the transition time corresponding to the determined moving direction, and displays on the display unit the information regarding the time point when the determined transition time has passed since the time point corresponding to the information being displayed on the display unit. Therefore, it is possible to display on the display unit the information regarding the time point when a desired time has passed since the time point corresponding to the information being displayed on the display unit based on an intuitive and simple operation.

In addition, according to the display device described in the second aspect of the present invention, if the finger of the user has moved using the position corresponding to the display position of the first vehicle symbol as the origin on the touch panel, the display controlling part displays on the display unit the map including the second vehicle symbol indicating the predicted position of the vehicle at the time point when the determined transition time has passed since the time point corresponding to the vehicle position indicated by the first vehicle symbol. Therefore it is possible to display on the display unit the map including the second vehicle symbol indicating the predicted position of the vehicle at the time point when a desired time has passed since the time point corresponding to the vehicle position indicated by the first vehicle symbol being displayed on the display unit based on an intuitive and simple operation.

In addition, according to the display device described in the third aspect of the present invention, if the finger of the user has moved using the position corresponding to the display position of the first facility symbol as the origin on the touch panel, the display controlling part displays on the display unit the map including the second facility symbol corresponding to the facility, which exists in the vicinity of the position corresponding to the time point when the determined transition time has passed since the time point corresponding to the position of the facility indicated by the first facility symbol and which has the same attribute as the attribute indicated by the first facility symbol that was displayed at the origin. Therefore, it is possible to display on the display unit the map including the second facility symbol indicating a desired facility, which exists in the vicinity of the position corresponding to the time point when a desired time has passed since the time point corresponding to the position of the facility indicted by the first facility symbol being displayed on the display unit based on an intuitive and simple operation.

### BRIEF DESCRIPTION OF THE DRAWINGS

FIG. 1 is a block diagram illustrating a display device according to an embodiment.

FIG. 2 illustrates information stored in a display target table.

FIG. 3 is a flowchart of display control processing.

FIG. 4 illustrates a correspondence relation between a moving direction of a finger of a user and a transition time.

FIGS. 5A and 5B illustrate information displayed on a display. FIG. 5A shows a situation before a flick operation is performed. FIG. 5B shows a situation where information displayed on the display was scrolled according to the flick operation.

FIGS. 6A and 6B illustrate information displayed on the display. FIG. 6A shows a situation before a flick operation is performed. FIG. 6B shows a situation where information displayed on the display was scrolled according to the flick operation.

FIGS. 7A and 7B illustrate information displayed on the display. FIG. 7A shows a situation before a flick operation is performed. FIG. 7B shows a situation where information displayed on the display was scrolled according to the flick operation.

### DETAILED DESCRIPTION OF THE PREFERRED EMBODIMENT

A display device, a display method, and a computer program product according to the present invention are described in detail below with reference to an embodiment in conjunction with the accompanying drawings. However, the present invention is not limited to the embodiment. The following explanation is given under the condition where the display device is installed in a vehicle as a part of a vehicular navigation system.

### (Configuration)

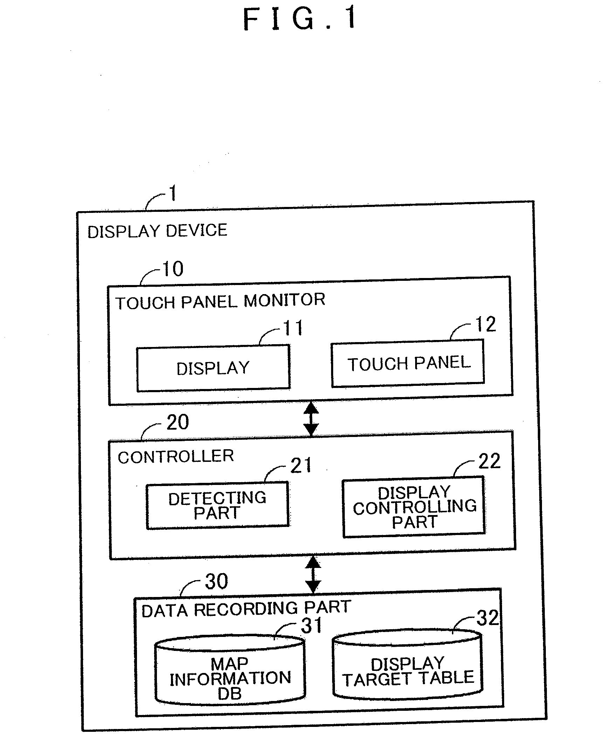

First, configuration of the display device according to the embodiment is explained. FIG. 1 is a block diagram illustrating the display device according to the embodiment. As shown in FIG. 1, a display device 1 is provided with a touch panel monitor 10, a controller 20, and a data recording part 30.

### (Configuration-Touch Panel Monitor)

The touch panel monitor 10 is provided with a display 11 and a touch panel 12. The display 11 is a display unit that displays information regarding a predetermined time point based on control of the controller 20. For example, the display 11 displays a map including a vehicle symbol (hereinafter, referred to as "vehicle icon" as needed) indicating a vehicle position at the predetermined time point, a map including a facility symbol (hereinafter, referred to as "facility icon" as needed) indicating a position and an attribute of a facility, a map including the facility icon and the vehicle icon, or the like. A specific configuration of the display 11 is arbitrary. A known liquid crystal display or a flat panel display such as an organic EL display can be utilized.

The touch panel 12 is an input unit that, when being pressed by a finger of a user or the like, accepts various kinds of operations including an operation input for moving an image displayed on the display 11. The touch panel 12 is transparent or semi-transparent, and installed overlapped with a display face of the display 11 on the front face of the display 11. For this touch panel 12, a known touch panel including an operated position detecting unit, for example, in a resistive method, a capacitance method or the like can be utilized.

### (Configuration-Controller)

The controller 20 is a controlling unit that controls the display device 1. Specifically, a computer provided with a CPU, various kinds of programs recognized and executed on the CPU (including a basic control program such as an OS and an application program to be activated on the OS and realize specific functions), and an internal memory such as a RAM for storing the programs and various kinds of data. Particularly, a display program according to the present embodiment is installed in the display device 1 through an arbitrary recording medium or a network to substantially form respective parts of the controller 20.

The controller 20 is, in terms of function concept, provided with a detecting part 21 and a display controlling part 22. The detecting part 21 is a detecting unit that detects a position of the finger of the user where the touch panel 12 is touched. The display controlling part 22 is a display controlling unit that displays information regarding a predetermined time point on the display 11. The processings executed by the respective components of the controller 20 are described in detail later.

### (Configuration-Data Recording Part)

The data recording part 30 is a recording unit that records programs and various kinds of data necessary for the operation of the display device 1. For example, the data recording part 30 utilizes a magnetic storage medium such as a hard disk (not shown) as an external storage device. However, in place of or in combination with the hard disk, other storage medium including a semiconductor-type storage medium such as a flash memory or an optical storage medium such as a DVD and a Blu-ray disk can be utilized.

The data recording part 30 is provided with a map information database 31 (hereinafter, database is referred to as "DB") and a display target table 32.

The map information DB 31 is a map information storing unit that stores map information. The "map information" includes for example link data (link numbers, connecting node numbers, road coordinates, road attributes, the number of lanes, driving regulation, and the like), node data (node numbers, coordinates), feature data (traffic lights, road sigh posts, guardrail, buildings, and the like), target feature data (intersections, stop lines, rail crossings, curves, ETC toll gates, highway exits, and the like), facility data (positions of facilities, types of facilities, and the like), geographic data, map display data for displaying a map on the display 11, and the like.

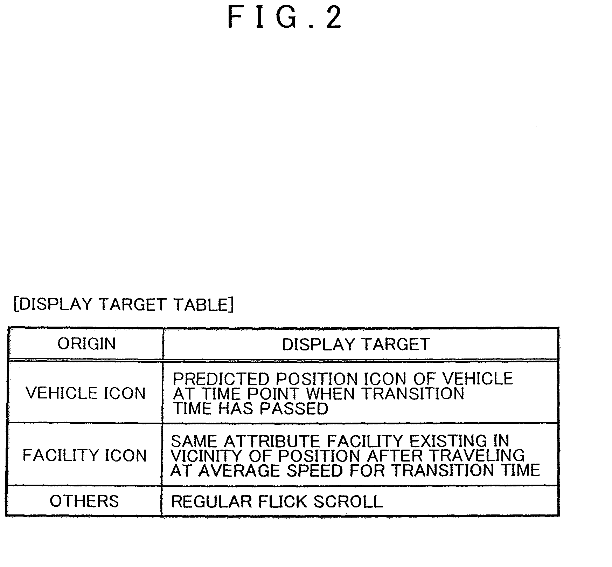

The display target table 32 is a display target information storing unit that stores display target information that determines information subject to display on the display 11. FIG. 2 illustrates information stored in the display target table 32. As shown in FIG. 2, the information corresponding to items "origin" and "display target" is stored in a correlated manner in the display target table 32. The information to be stored corresponding to the item "origin" is information to identify a type of the origin of a flick operation when the flick operation has been performed through the touch panel 12 (for example, "vehicle icon" in FIG. 2). The information to be stored corresponding to the item "display target" is display target information to identify information subject to display on the display 11 (for example, "predicted position icon of vehicle at time point when transition time has passed" in FIG. 2).

### (Processing-Display Control Processing)

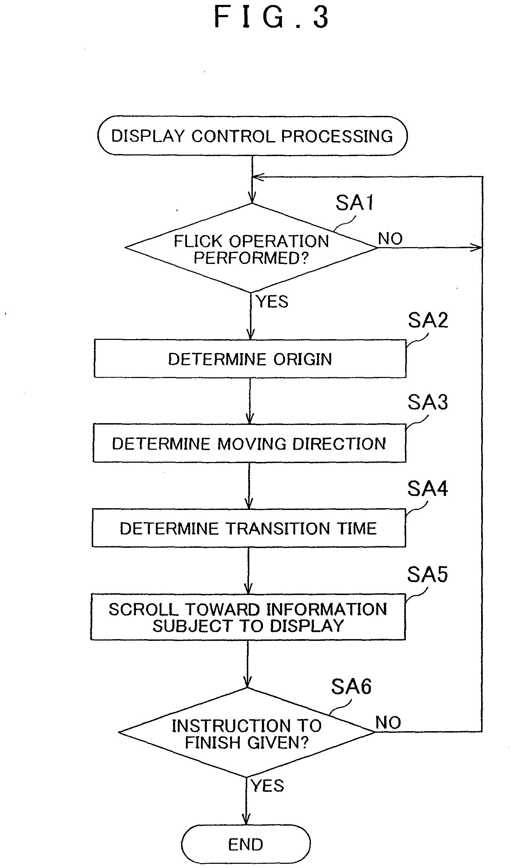

Next, display control processing to be executed on the display device 1 configured as above is explained. FIG. 3 is a flowchart of the display control processing (in the explanation of each processing below, step is referred to as "S"). The display control processing is initiated when the display device 1 has been powered on and a map has been displayed on the display 11.

As shown in FIG. 3, when the display control processing starts, the display controlling part 22 determines whether an operation (i.e., a flick operation) of flicking by a finger on the touch panel 12 has been performed, based on the position of the finger (hereinafter, referred to as "finger position" as needed) of the user detected by the detecting part 21 while the finger of the user is touching the touch panel 12 (SA1). For example, when the finger of the user touches the touch panel 12 and thereafter lifting-up of the finger of the user from the touch panel 12 has been detected by the detecting part 21 and when the speed of the finger of the user just before lifting up from the touch panel 12 is a predetermined value or more (for example, a value acquired by dividing the distance from the finger position detected by the detecting part 21 at a predetermined time before the finger position is finally detected by the detecting part 21 to the finger position finally detected by the detecting part 21 by the predetermined time), the display controlling part 22 determines that a flick operation has been performed.

As a result, when a flick operation has not been performed (SA1: NO), the display controlling part 22 repeats processing at SA1 until a flick operation is performed. On the other hand, when a flick operation has been performed (SA1: YES), the display controlling part 22 determines a position of an origin of the flick operation based on the finger position detected by the detecting part 21 while the finger of the user is touching the touch panel 12 (SA2). Specifically, the display controlling part 22 determines the position firstly detected by the detecting part 21 when the finger of the user has touched the touch panel 12 as the position of the origin of the flick operation.

Subsequently, the display controlling part 22 determines a moving direction of the finger of the user on the touch panel 12 based on the finger position detected by the detecting part 21 while the finger of the user is touching the touch panel 12 (SA3). Specifically, the display controlling part 22 determines the moving direction of the finger of the user just before the finger of the user lifts up from the touch panel 12 (for example, the direction from the finger position detected by the detecting part 21 a predetermined time before the finger position has been finally detected by the detecting part 21 to the finger position finally detected by the detecting part 21) as the moving direction of the finger of the user on the touch panel 12.

Next, the display controlling part 22 determines a transition time corresponding to the moving direction of the finger of the user on the touch panel 12 determined by the display controlling part 22 at SA3 (SA4). Here, the "transition time" represents a time period between a time corresponding to the information displayed on the display 11 and a time corresponding to the information that the display controlling part 22 should display on the display 11 based on the flick operation.

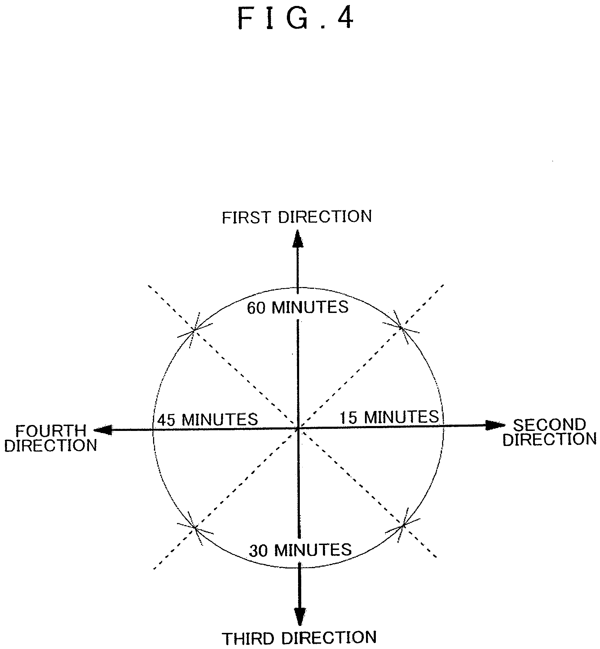

FIG. 4 illustrates a correspondence relation between the moving direction of the finger of the user and the transition time. As shown in FIG. 4, when an upward direction (for example, the direction from bottom to top of letters displayed on the display 11) based on the information displayed on the display 11 (for example, the letters displayed on the display 11) is defined as a first direction, if the moving direction of the finger of the user is in the area of ±45 degrees from the first direction as a center, the display controlling part 22 determines that the transition time is 60 minutes. In addition, when a second direction is a direction rotated in the clockwise direction by approximately 90 degrees from the first direction in the touch panel 12, if the moving direction of the finger of the user is in the area of ±45 degrees from the second direction as a center, the display controlling part 22 determines that the transition time is 15 minutes. When a third direction is a direction rotated in the clockwise direction by approximately 180 degrees from the first direction in the touch panel 12, if the moving direction of the finger of the user is in the area of ±45 degrees from the third direction as a center, the display controlling part 22 determines that the transition time is 30 minutes. When a fourth direction is a direction rotated in the clockwise direction by approximately 270 degrees from the first direction in the touch panel 12, if the moving direction of the finger of the user is in the area of ±45 degrees from the fourth direction as a center, the display controlling part 22 determines that the transition time is 45 minutes.

Next, the display controlling part 22 determines the information subject to be displayed on the display 11 based on the position of the origin of the flick operation determined by the display controlling part 22 at SA2 and the transition time determined by the display controlling part 22 at SA4, and scrolls the information displayed on the display 11 until the determined information is displayed on the display 11 (SA5).

Specifically, the display controlling part 22 acquires display target information corresponding to the position of the origin of the flick operation determined by the display controlling part 22 at SA2 from the display target table 32, determines information subject to be displayed on the display 11 based on the acquired display target information and the transition time determined by the display controlling part 22 at SA4, and scrolls the information being displayed on the display 11 until the determined information is displayed on the display 11.

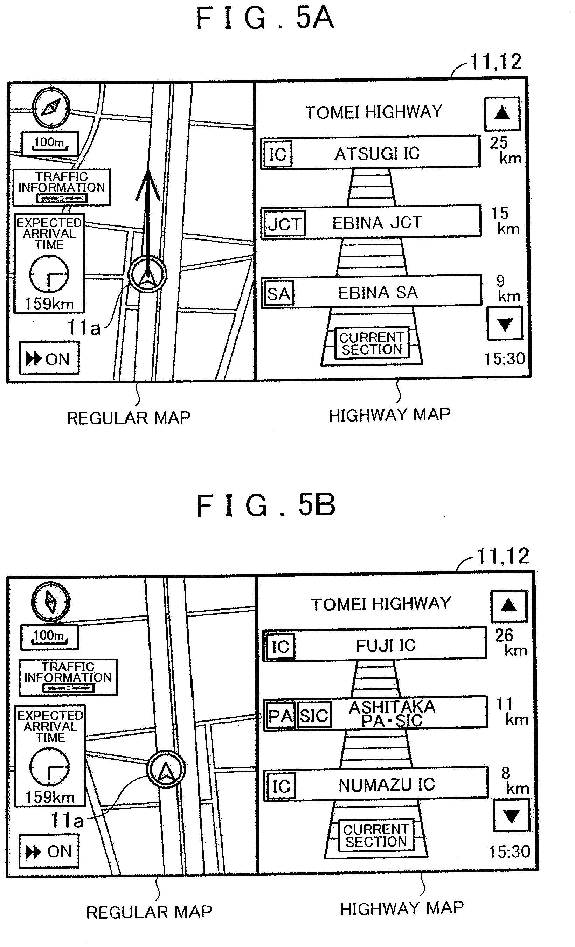

FIGS. 5A and 5B illustrate information displayed on the display 11. FIG. 5A shows a situation before a flick operation is performed. FIG. 5B shows a situation where the information displayed on the display 11 was scrolled according to the flick operation. For example, as shown in FIG. 5A, when the position of the origin of the flick operation determined by the display controlling part 22 at SA2 is the position (in the present embodiment, the same position as the display position of a vehicle icon 11a) corresponding to the display position of the vehicle icon 11a (a first vehicle symbol) on a regular map (the map on the left side in FIG. 5A), the display controlling part 22 acquires, according to the display target table 32 in FIG. 2, the "predicted position icon at time point when transition time has passed" as the corresponding display target information. In this case, the display controlling part 22 determines a predicted position of the vehicle at a time point when the transition time determined at SA4 has passed since a time point (i.e., a time point when the vehicle is located at the position corresponding to the vehicle icon 11a) corresponding to the vehicle position indicated by the vehicle icon 11a that is the origin of the flick operation. For example, when a travel route is being calculated by a route search unit (not shown) in a known route search method, if the display position of the vehicle icon 11a being displayed at the position corresponding to a point on the travel route is determined as the position of the origin of the flick operation, the display controlling part 22 determines, based on an average travel speed of the vehicle, congestion information, and the like, a predicted arrival position when the vehicle travels along the travel route for the transition time as a "predicted position of the vehicle". In addition, even when a travel route is not being calculated, if the display position of the vehicle icon 11a that is the origin of the flick operation is located at a position corresponding to a point on a road where there are a few intersections like a motorway, the display controlling part 22 determines, based on an average travel speed of the vehicle, congestion information, and the like, the predicted arrival position when the vehicle travels along the road for the transition time as the "predicted position of the vehicle". The display controlling part 22 scrolls the information being displayed on the display 11 until the map including the vehicle icon 11a (a second vehicle symbol) indicating the determined predicted position of vehicle is displayed on the display 11. For example, as shown in FIG. 5A, when the moving direction (a direction indicated by an arrow in FIG. 5A) of the finger of the user is in the area of ±45 degrees from the first direction (the upward direction in FIG. 5A) as a center, the display controlling part 22 determines that the transition time is 60 minutes at SA4 in FIG. 3 and scrolls the regular map such that the map including the vehicle icon 11a indicating the predicted position of the vehicle at a time point when 60 minutes has passed since the time point corresponding to the vehicle position indicated by the vehicle icon 11a is displayed on the display 11, as shown in FIG. 5B. In this case, the display controlling part 22 also scrolls a motorway map (the map on the right side in FIGS. 5A and 5B) along with the scroll of the regular map. The first vehicle symbol and the second vehicle symbol may have the same display mode or different display modes.

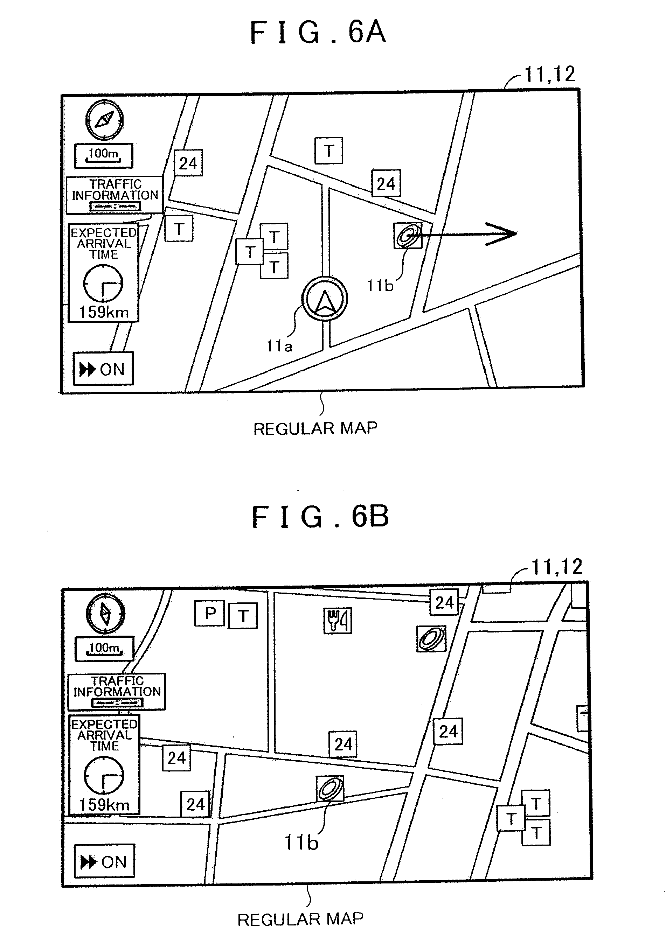

In addition, FIGS. 6A and 6B illustrate information displayed on the display 11. FIG. 6A shows a situation before a flick operation is performed. FIG. 6B shows a situation where the information displayed on the display 11 was scrolled according to the flick operation. For example, as shown in FIG. 6A, when the position of the origin of the flick operation determined by the display controlling part 22 at SA2 is the position (in the present embodiment, the same position as the display position of a facility icon 11b) corresponding to the display position of the facility icon 11b on the regular map (the map in FIG. 6A), the display controlling part 22 acquires, according to the display target table 32 in FIG. 2, a "same attribute facility existing in vicinity of position after traveling at average speed for transition time" as the corresponding display target information. In this case, the display controlling part 22: determines a position (i.e., the predicted arrival position when the vehicle travels along an arbitrary road from the position corresponding to the facility icon 11b at a predetermined average speed (for example, 40 km/h or the like) for the transition time) corresponding to the time point when the transition time determined at SA4 has passed since the time point (i.e., the travel start time point when the vehicle is supposed to start traveling from the position corresponding to the facility icon 11b) corresponding to the position of the facility indicated by the facility icon 11b (a first facility symbol) that is the origin of the flick operation; and determines the facility, which exists in the vicinity of the determined position and which has the same attribute as the attribute indicated by the facility icon 11b that was displayed at the origin of the flick operation by referring to the map information DB 31. The display controlling part 22 scrolls the information displayed on the display 11 until the map including the facility icon 11b (a second facility symbol) corresponding to the determined facility is displayed on the display 11. For example, as shown in FIG. 6A, when the position of the origin of the flick operation determined by the display controlling part 22 at SA2 is the display position of the facility icon 11b representing a gas station and the moving direction (a direction indicated by an arrow in FIG. 6A) of the finger of the user is in the area of ±45 degrees from the second direction (the right direction in FIG. 6A) as a center, the display controlling part 22 determines that the transition time is 15 minutes at SA4 in FIG. 3 and scrolls the regular map such that the map including the facility icon 11b of a gas station existing in the vicinity of the predicted arrival position when the vehicle travels along an arbitrary road at a predetermined average speed for 15 minutes from the gas station corresponding to the facility icon 11b that is the origin of the flick operation is displayed on the display 11, as shown in 6B. The first facility symbol and the second facility symbol may have the same display mode or different display modes.

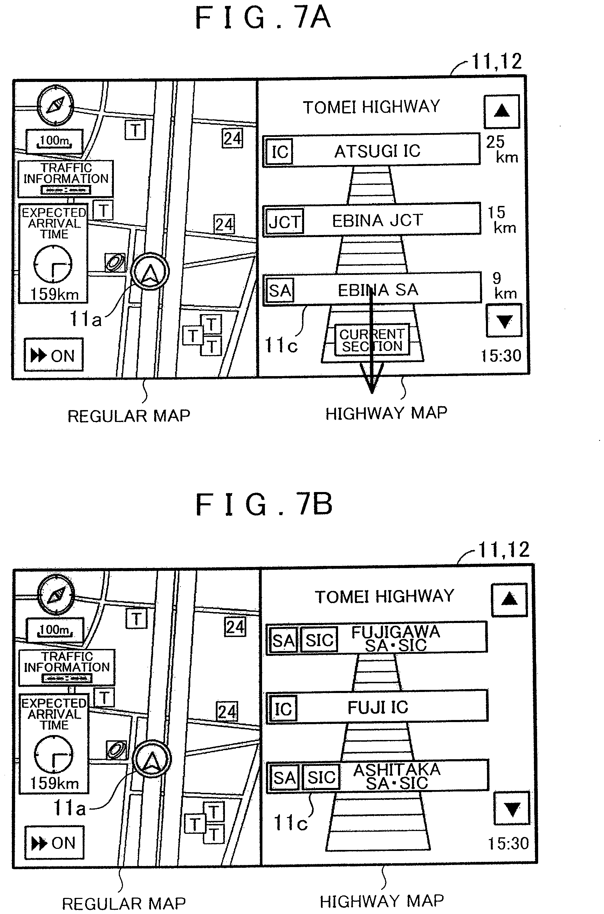

FIGS. 7A and 7B illustrate the information displayed on the display 11. FIG. 7A shows a situation before a flick operation is performed. FIG. 7B shows a situation where the information displayed on the display 11 was scrolled according to the flick operation. For example, as shown in FIG. 7A, when the display manner of the display 11 is a two-screen display and the position (in the present embodiment, the same position as the display position of a facility icon 11c) corresponding to the display position of the facility icon 11c that represents a motorway facility (for example, a service area, a parking area, a junction, an interchange, a toll gate, or the like) on a highway map (the map on the right side in FIG. 7A) that displays highway information regarding a highway is determined as the position of the origin of the flick operation, the display controlling part 22 acquires, according to the display target table 32 in FIG. 2, the "same attribute facility existing in vicinity of position after traveling at average speed for transition time" as the corresponding display target information. In this case, the display controlling part 22 determines, by referring to the map information DB 31, a facility, which exists in the vicinity of the position (i.e., the predicted arrival position when the vehicle travels along the road from the position corresponding to the facility icon 11c at a predetermined average speed (for example, 80 km/h or the like) for the transition time) corresponding to the time point when the transition time determined at SA4 has passed since the time point (i.e., the travel start time point when the vehicle is supposed to start traveling from the position corresponding to the facility icon 11c) corresponding to the position of the facility indicated by the facility icon 11c that is the origin of the flick operation and which has the same attribute as the attribute indicated by the facility icon 11c that was displayed at the origin of the flick operation. The display controlling part 22 scrolls the information displayed on the display 11 until the highway map including the facility icon 11c corresponding to the determined facility is displayed on the display 11. For example, as shown in FIG. 7A, when the position of the origin of the flick operation determined by the display controlling part 22 at SA2 is the display position of the facility icon 11c representing a service area on the highway map and the moving direction (the direction indicated by an arrow in FIG. 7A) of the finger of the user is in the area of ±45 degrees from the third direction (the downward direction in FIG. 7A) as a center, the display controlling part 22 determines that the transition time is 30 minutes at SA4 in FIG. 3 and scrolls the highway map such that the highway map including the facility icon 11c of a service area existing in the vicinity of the predicted arrival position when the vehicle travels along the road at a predetermined average speed for 30 minutes from the service area corresponding to the facility icon 11c that is the origin of the flick operation is displayed on the display 11, as shown in 7B.

In addition, if the position of the origin of the flick operation determined by the display controlling part 22 at SA2 does not correspond to any of the vehicle icon 11a, the facility icon 11b, and the facility icon 11c representing a highway facility on the screen for displaying the highway information (for example, the position where none of the vehicle icon 11a, the facility icon 11b, and the facility icon 11c exists on the map is the origin of the flick operation), the display controlling part 22 acquires, according to the display target table 32 in FIG. 2, a "regular flick scroll" as the corresponding display target information. In this case, the display controlling part 22 determines a speed vector of the finger of the user based on the distance from the finger position detected by the detecting part 21 at a predetermined time before the finger position is lastly detected by the detecting part 21 to the finger position lastly detected by the detecting part 21, and scrolls the map by a vector based on the speed vector.

Back to FIG. 3, after the processing at SA5, the display controlling part 22 judges whether an instruction to finish the display control processing has been input (SA6). For example, if an instruction input to return to the screen (for example, a current position display screen, or the like) before performing map scroll has been received through the touch panel 12, or if an instruction input to display a screen (for example, a menu screen or the like) different from the map has been received through the touch panel 12, the display controlling part 22 judges that an instruction to finish the display control processing has been input.

As a result, if an instruction to finish the display control processing has not been input (SA6: NO), the display controlling part 22 returns to SA1. Thereafter, the display controlling part 22 repeats the processings from SA1 to SA6 until it is judged at SA6 that an instruction to finish the display control processing has been input. On the other hand, if an instruction to finish the display control processing has been input (SA6: YES), the controller 20 finishes the display control processing.

### (Effect)

According to the present embodiment, the display controlling part 22 determines the moving direction of the finger of the user on the touch panel 12 based on the position of the finger of the user detected by the detecting part 21 while the finger of the user is touching the touch panel 12, determines the transition time corresponding to the determined moving direction, and displays on the display 11 the information regarding the time point when the determined transition time has passed since the time point corresponding to the information being displayed on the display 11. Therefore, it is possible to display on the display 11 the information regarding the time point when a desired time has passed since the time point corresponding to the information being displayed on the display 11 based on an intuitive and simple operation.

In addition, if the finger of the user has moved using the position corresponding to the display position of the vehicle icon 11a as the origin on the touch panel 12, the display controlling part 22 displays on the display 11 the map including the vehicle icon 11a indicating the predicted position of the vehicle at the time point when the determined transition time has passed since the time point corresponding to the vehicle position indicated by the vehicle icon 11a. Therefore, it is possible to display on the display 11 the map including the vehicle icon 11a indicating the predicted position of the vehicle at the time point when a desired time has passed since the time point corresponding to the vehicle position indicted by the vehicle icon 11a being displayed on the display 11 based on an intuitive and simple operation.

In addition, if the finger of the user has moved using the position corresponding to the display position of the facility icon 11b or 11c as the origin on the touch panel 12, the display controlling part 22 displays on the display 11 the map including the facility icon 11b or 11c corresponding to the facility, which exists in the vicinity of the position corresponding to the time point when the determined transition time has passed since the time point corresponding to the position of the facility indicated by the facility icon 11b or 11c and which has the same attribute as the attribute indicated by the facility icon 11b or 11c that was displayed at the origin. Therefore, it is possible to display on the display 11 the map including the facility icon 11b or 11c indicating a desired facility, which exists in the vicinity of the position corresponding to the time point when a desired time has passed since the time point corresponding to the position of the facility indicted by the facility icon 11b or 11c being displayed on the display 11 based on an intuitive and simple operation.

### (Modification Examples for the Embodiment)

An embodiment of the present invention was explained above. However, the specific configuration and units for implementing the present invention may be modified and improved in any manner or form within the scope of the technical ideas of the present invention as set forth in the claims thereof. Examples of such modifications are explained below.

### (Problems to be Solved by the Invention and its Effects)

Problems to be solved by the invention and effects of the invention are not limited to the contents described above, and may vary depending on the environment where the invention is executed and/or details of the configuration. Therefore, only a part of the problems described above may be solved, or only a part of the effects described above may be accomplished.

### (Touch Panel)

In the above embodiment, it was explained that the touch panel 12 is installed so as to be overlapped with a display face of the display 11 on the font face of the display 11. However, the touch panel 12 may be installed at a position different from the front face of the display 11. In this case, for example, a cursor corresponding to the touched position of the finger of the user on the touch panel 12 is displayed on the display 11, and the determination of the presence or absence of a flick operation (SA1 in FIG.3), the determination of the origin of the flick operation (SA2 in FIG. 3), and the determination of the moving direction of the finger of the user on the touch panel 12 (SA3 in FIG. 3) may be performed based on the position of the cursor on the display 11.

### (Display Control Processing)

In the above-mentioned embodiment, the display control processing of FIG. 3 is explained using an example as follows. If the moving direction of the finger of the user is in the area of ±45 degrees from the first direction as a center, it is determined that the transition time is 60 minutes. If the moving direction of the finger of the user is in the area of ±45 degrees from the second direction as a center, it is determined that the transition time is 15 minutes. If the moving direction of the finger of the user is in the area of ±45 degrees from the third direction as a center, it is determined that the transition time is 30 minutes. If the moving direction of the finger of the user is in the area of ±45 degrees from the fourth direction as a center, it is determined that the transition time is 45 minutes. However, the transition time corresponding to the moving direction of the finger on the touch panel 12 may be determined based on a criterion different from the above. For example, when defining the upward direction (for example, the direction from bottom to top of the letters displayed on the display 11) with respect to the information (for example, the letters displayed on the display 11) displayed on the display 11 as a first direction, if the moving direction of the finger of the user is in the area of ±60 degrees from the first direction as a center, it may be determined that the transition time is 60 minutes. When a second direction is a direction rotated in the clockwise direction by approximately 120 degrees from the first direction in the touch panel 12, if the moving direction of the finger of the user is in the area of ±60 degrees from the second direction as a center, it may be determined that the transition time is 20 minutes. When a third direction is a direction rotated in the clockwise direction by approximately 240 degrees from the first direction in the touch panel 12, if the moving direction of the finger of the user is in the area of ±60 degrees from the third direction as a center, it may be determined that the transition time is 40 minutes.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

A display device 1 is provided with a display 11 that displays information regarding a predetermined time point, a touch panel 12, a detecting part 21 that detects a position of a finger of a user where the touch panel 12 is touched, and a display controlling part 22 that determines a moving direction of the finger of the user on the touch panel 12 based on the position of the finger of the user detected by the detecting unit 21 while the finger of the user is touching the touch panel 12, determines a transition time corresponding to the determined moving direction, and displays on the display 11 information regarding the time point when the determined transition time has passed since the time point corresponding to information being displayed on the display 11.

A display device comprises a displaying unit that displays information regarding a predetermined time point, a touch panel, a detecting unit that detects a position of a finger of a user where the touch panel is touched, and a display controlling unit. The display control unit determines a moving direction of the finger of the user on the touch panel based on the position of the finger of the user detected by the detecting unit while the finger of the user is touching the touch panel, determines a transition time corresponding to the determined moving direction, and displays on the display unit information regarding a time point when the determined transition time has passed since a time point corresponding to information being displayed on the display unit.

## Claims

1. A display device (1) comprising:
a display unit (11) that displays information regarding a predetermined time point;
a touch panel (12);
a detecting unit (21) that detects a position of a finger of a user where the touch panel (12) is touched; and
a display controlling unit (22) that determines a moving direction of the finger of the user on the touch panel (12) based on the position of the finger of the user detected by the detecting unit (21) while the finger of the user is touching the touch panel (12), determines a transition time corresponding to the determined moving direction, and displays on the display unit (11) information regarding a time point when the determined transition time has passed since a time point corresponding to information being displayed on the display unit (11).

2. The display device (1) according to claim 1, wherein
the display unit (11) is configured to display a map including a first vehicle symbol indicating a vehicle position at a predetermined timepoint; and
the display controlling unit (22), if the finger of the user has moved using a position corresponding to a display position of the first vehicle symbol as an origin, is configured to display on the display unit (11) a map including a second vehicle symbol indicating a predicted position of the vehicle at a time point when the determined transition time has passed since a time point corresponding to the vehicle position indicated by the first vehicle symbol.

3. The display device (1) according to claim 1 or 2, wherein
the display unit (11) is configured to display a map including a first facility symbol indicating a position and an attribute of a facility; and
the display controlling unit (22), if the finger of the user has moved using a position corresponding to a display position of the first facility symbol as an origin, is configured to display on the display unit (11) a map including a second facility symbol corresponding to a facility, which exists in the vicinity of a position corresponding to a time point when the determined transition time has passed since a time point corresponding to the position of the facility indicated by the first facility symbol and which has the same attribute as the attribute indicated by the first facility symbol that was displayed at the origin.

4. A display method comprising the steps of:
displaying information regarding a predetermined time point on a display unit (11);
detecting a position of a finger of a user where a touch panel (12) is touched;
and
determining a moving direction of the finger of the user on the touch panel (12) based on the position of the finger of the user detected at the detecting step while the finger of the user is touching the touch panel (12), determining a transition time corresponding to the determined moving direction, and displaying on the display unit (11) information regarding a time point when the determined transition time has passed since a time point corresponding to information being displayed on the display unit (11).

5. A computer program including a program for a processing device, comprising software code portions for performing the steps according to claim 4 when the program is run on the processing device.

6. The computer program product according to claim 5, wherein the computer program product comprises a computer-readable medium on which the software code portions are stored.

7. The computer program product according to claim 5, wherein the program is directly loadable into an internal memory of the processing device.
